# FASCICULE DE BREVET EUROPEEN

(11) **EP 0 858 921 B1**
(45) Date de publication et mention de la délivrance du brevet: **16.07.2003**
(21) Numéro de dépôt: 98400356.6
(22) Date de dépôt: 16.02.1998
(51) Int. Cl.: B60J 5/10

(54) **Hayon intégrant un toit ouvrant d'un véhicule automobile**
Kraftfahrzeug mit einer Heckklappe mit integriertem Schiebedach
Hatchback door for vehicle with integrated sliding roof

(30) Priorité: 17.02.1997 FR 9701824
(43) Date de publication de la demande: 19.08.1998
(73) Titulaire: AUTOMOBILES PEUGEOT, 75116 Paris (FR); AUTOMOBILES CITROEN, 92200 Neuilly-sur-Seine (FR)
(72) Inventeur: Gardiner, Geoffroy Thomas, 78000 Versailles (FR)
(74) Mandataire: Robert, Jean-François

(56) Documents cités:
- EP-A- 0 774 370
- DE-A- 2 018 319
- DE-C- 19 513 520
- GB-A- 2 188 595
- US-A- 4 184 709

## Description

La présente invention concerne le domaine automobile. Elle a pour objet un véhicule automobile muni d'un hayon vitré et d'un toit ouvrant disposé à l'arrière du toit du véhicule.

Lorsque l'on souhaite transporter des objets encombrants ou de grande taille dans un véhicule équipé d'un coffre ou d'un hayon on est obligé de laisser le volet ouvert pour laisser dépasser l'objet. Mais ceci est dangereux car, quand le véhicule roule, le volet peut battre sur l'objet et le faire tomber ou le faire bouger, voire l'endommager.

On peut fixer le volet pour éviter tout mouvement mais cela nécessite l'utilisation d'éléments extérieurs tels que des cordes, des ficelles, des élastiques ou des tendeurs ou câbles élastiques, qu'il faut accrocher, ce qui n'est pas toujours commode, car il n'est pas prévu d'emplacement pour les fixer; on utilise donc des équipements extérieurs non prévus à cet effet (par exemple l'essuie-glace arrière, le pare-chocs...) en courant le risque de les endommager.

On peut aussi essayer d'immobiliser l'objet dans le coffre, mais ce n'est pas toujours possible et cela peut être laborieux.

Pour résoudre ce problème, il est connu de disposer un toit ouvrant à l'arrière du toit de telle façon que l'arrière du toit ouvrant soit en contact avec la ligne d'articulation d'un hayon sans entretoise et de permettre ainsi le chargement dans le coffre d'objets encombrants ou de grande taille tout en pouvant fermer le hayon et donc diminuer le risque d'une chute de l'objet pendant que le véhicule roule.

Dans cette configuration, pour charger un objet de grande taille, il suffit de faire coulisser le toit ouvrant vers l'avant et d'ouvrir le hayon, puis de disposer l'objet à charger dans le coffre tout en le laissant dépasser par le toit ouvrant et enfin de refermer le hayon.

Un tel système présente plusieurs inconvénients:
- il limite les conditions d'utilisation du hayon. En effet, quand le toit ouvrant est fermé, le joint d'étanchéité du toit ouvrant qui est en contact avec la vitre du hayon, interdit le mouvement de rotation du hayon ce qui oblige alors l'utilisateur à ouvrir le toit ouvrant avant d'ouvrir le hayon, ou à ouvrir la vitre du hayon si elle est mobile;
- la vitre du hayon doit pouvoir s'ouvrir afin de permettre l'utilisation du hayon quand le toit ouvrant est fermé et le mécanisme d'ouverture de cette vitre alourdit le hayon;
- l'étanchéité entre le toit ouvrant et le hayon est difficile à réaliser car les deux pièces en contact sont mobiles et il est difficile de placer l'étanchéité sur ces pièces;
- la rigidité de cette partie du toit est diminuée puisque le toit ouvrant et le hayon étant disposés en continu, l'ouverture réalisée dans le toit est importante;
- le hayon n'ayant pas d'entretoise à sa partie haute qui supporte également l'articulation, il est nécessaire de renforcer la partie basse, ce qui alourdit le hayon et affaiblit les articulations.

Le but de la présente invention est de proposer un système simple permettant le chargement d'objets volumineux grâce à un toit ouvrant coopérant d'une façon originale avec le hayon arrière du véhicule, tout en permettant l'ouverture du hayon sans ouvrir le toit ouvrant, et ayant une bonne étanchéité tout en étant suffisamment rigide.

Selon la présente invention, le véhicule automobile, muni d'un hayon vitré et d'un toit ouvrant disposé à l'arrière du toit du véhicule, est caractérisé en ce que les articulations du hayon sont disposées à l'avant de l'ouverture du toit ouvrant.

Cette disposition permet l'ouverture du hayon dans toutes les configurations:
- quand le toit ouvrant est fermé,
- quand le toit ouvrant est ouvert, totalement ou partiellement.

Selon une disposition particulière de l'invention, le hayon est pourvu d'une entretoise disposée sur la partie haute de la vitre équipant le hayon soit à mi-hauteur, ce qui permet sa rigidification.

Selon une disposition particulière de l'invention, le dessous de l'entretoise et le dessous de la vitre du toit ouvrant sont disposés en continuité l'un avec l'autre afin que la continuité entre le hayon et le toit permette un meilleur écoulement de l'eau dans les rigoles d'écoulement classiques du hayon. Cette disposition permet également une meilleure étanchéité à l'air, ce qui diminue les bruits aérodynamiques.

Selon une variante de l'invention, la rigidification du hayon peut également être réalisée en disposant une entretoise sur la partie haute du hayon.

Dans ce cas, pour laisser une ouverture correspondant au toit ouvrant, la vitre s'arrête avant l'entretoise. Le bord arrière du toit ouvrant est alors en contact avec la vitre du hayon.

Selon une disposition particulière de l'invention, l'étanchéité du hayon et du toit ouvrant est réalisée par un joint d'étanchéité périphérique disposé sur tout le pourtour de l'ouverture constituée par le hayon et le toit ouvrant.

Selon une disposition particulière de l'invention, le toit ouvrant est équipé d'un joint d'étanchéité disposé à l'arrière, ce qui évite l'écoulement de l'eau dans l'habitacle entre l'arrière du toit ouvrant et la vitre du hayon.

Selon une disposition particulière de l'invention, ce joint d'étanchéité dirige l'écoulement de l'eau du toit ouvrant sur les côtés, à l'extérieur du joint périphérique dans la zone d'évacuation classique d'un hayon.

Selon une disposition particulière de l'invention, le toit ouvrant s'ouvre en coulissant vers l'avant du véhicule, afin de bien dégager l'arrière du véhicule quand un objet encombrant est placé dans le coffre.

Selon une disposition particulière de l'invention, le toit ouvrant est en verre.

Selon une variante de l'invention, lorsque le toit du véhicule et son arrière ont un rayon de courbure identique, le toit ouvrant peut alors également constituer la vitre du hayon qui s'escamote ainsi complètement dans le toit du véhicule.

Selon une variante de l'invention, le hayon est équipé d'une glace coulissante qui rentre dans la partie basse du hayon permettant ainsi un autre mode d'ouverture de la partie arrière du véhicule.

Selon une disposition particulière de l'invention, le toit du véhicule est renforcé à l'avant du toit ouvrant, afin de rigidifier le véhicule dans cette partie affaiblie par le trou correspondant au toit ouvrant et au hayon.

Selon une disposition particulière de l'invention, le véhicule est renforcé sur le pourtour de l'ouverture correspondant au hayon et au toit ouvrant afin d'éviter des déformations qui pourraient apparaître dans la caisse du véhicule dues à la zone de faiblesse ainsi constituée.

Le toit ouvrant peut également être disposé au-dessus du toit au lieu d'au-dedans.

D'autres caractéristiques et avantages de l'invention ressortiront plus clairement de la description qui va suivre donnée uniquement à titre d'exemple et faite en se référant aux dessins annexés sur lesquels:
- la figure 1 est une vue en perspective d'un véhicule suivant l'invention avec le toit ouvrant et le hayon fermés;
- la figure 2 est une vue en perspective du véhicule avec le hayon ouvert et le toit ouvrant fermé;
- la figure 3 est une vue en perspective du véhicule avec le hayon et le toit ouvrant ouverts;
- la figure 4 est une vue en perspective du véhicule avec le toit ouvrant ouvert et le hayon fermé;

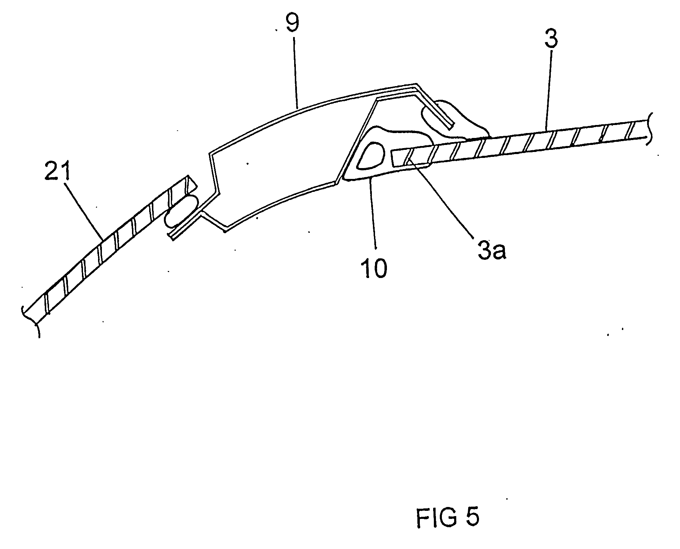

- la figure 5 est une vue partielle en coupe suivant la ligne V-V de la figure 1;
- la figure 6 est une vue partielle en coupe suivant la ligne VI-VI de la figure 1;
- la figure 7 est une vue partielle en coupe suivant la ligne VII-VII de la figure 1;
- la figure 8 est une vue partielle en coupe suivant la ligne VIII-VIII de la figure 1;
- la figure 9 est une variante de la figure 8 avec l'entretoise du hayon positionnée près de l'articulation du hayon;
- la figure 10 est une vue en perspective d'une variante où le toit ouvrant et la vitre du hayon ne font qu'une seule et même pièce;
- la figure 11 est une vue latérale partielle de la variante de la figure 10.

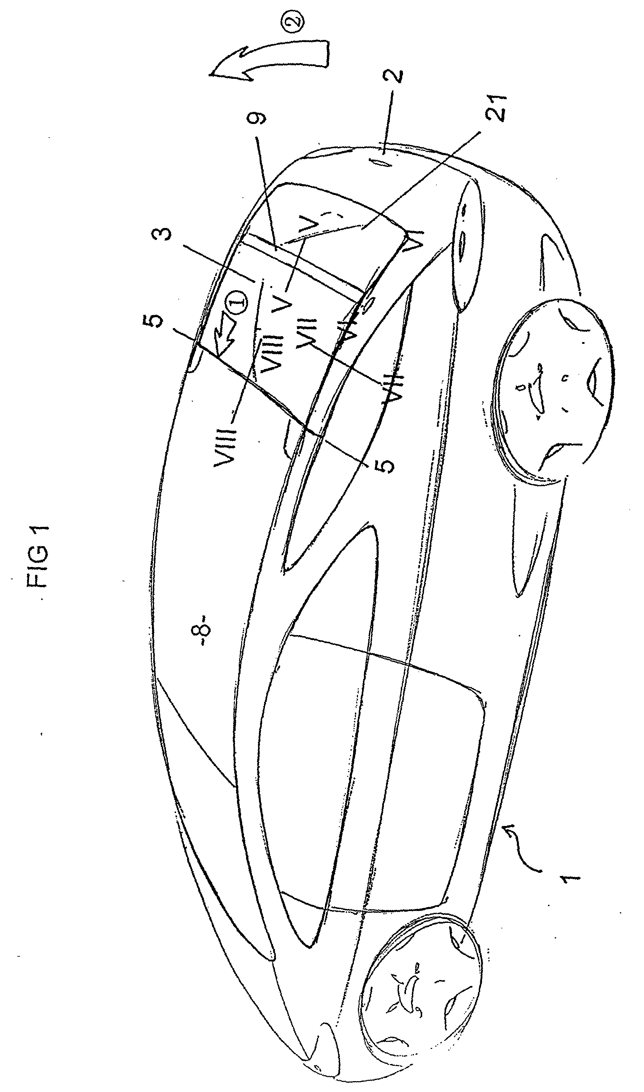

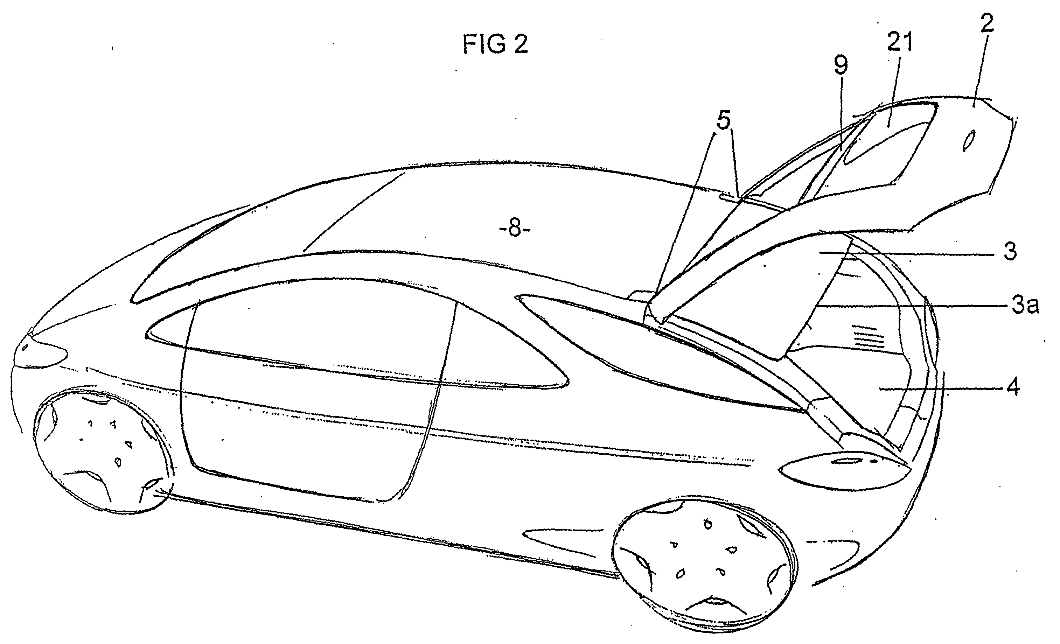

Le véhicule 1, représenté à la figure 1, comporte un hayon 2 et un toit ouvrant 3. L'ouverture du toit ouvrant se fait suivant le mouvement de la flèche ① et celui du hayon selon le mouvement de la flèche ②. Les deux mouvements sont indépendants, ainsi comme on le voit à la figure 2, le hayon 2 peut être soulevé, libérant ainsi l'accès au coffre 4. L'articulation 5 du hayon est disposée à l'avant du toit ouvrant 3, ce qui permet une utilisation classique du hayon.

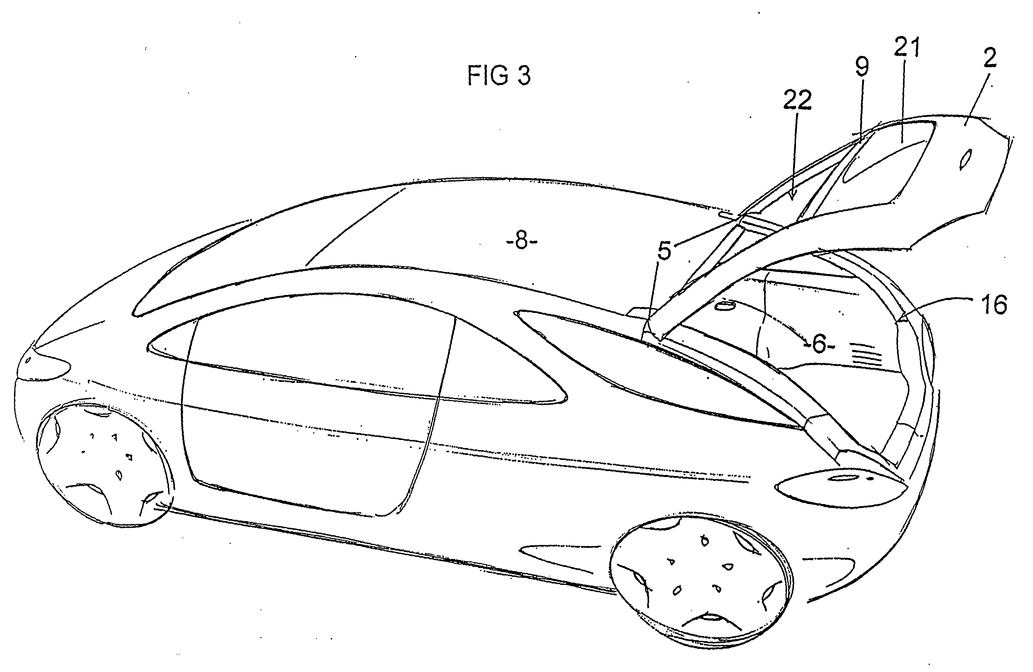

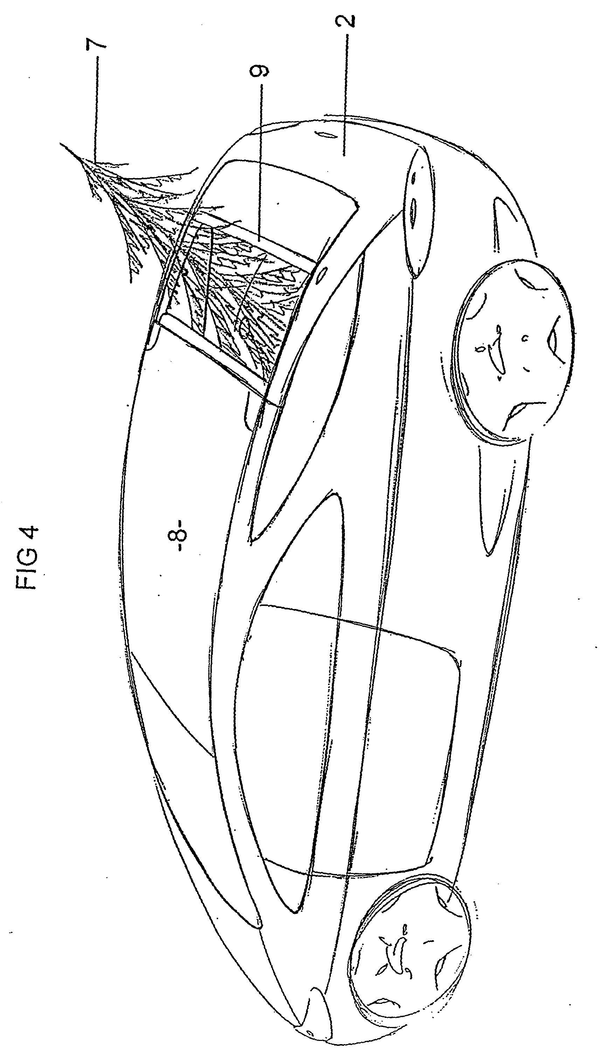

Quand on charge un objet volumineux 7 quelconque, il suffit d'ouvrir le hayon 2, de pousser le toit ouvrant 3 vers l'avant du toit 8, libérant ainsi un espace 6, dans lequel on peut introduire l'objet 7 à charger comme cela se voit sur la figure 3, puis refermer le hayon 2 tout en laissant le toit ouvrant 3 ouvert comme cela apparaît à la figure 4.

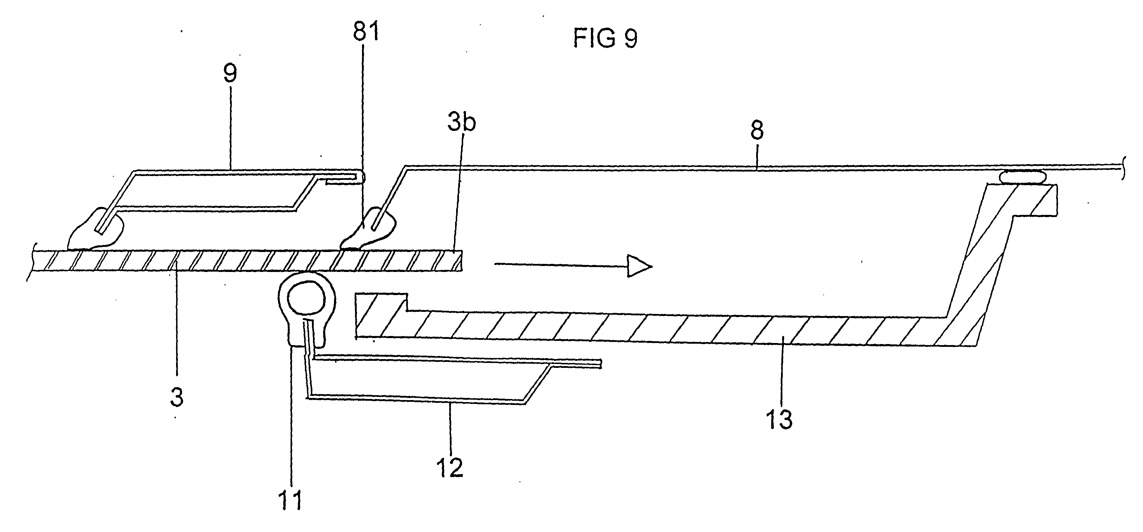

Le hayon 2 est rigidifié par une entretoise 9 qui peut être disposée soit en haut de la vitre 21 du hayon, soit dans la partie haute du hayon comme un hayon classique (cf figure 9) mais alors la vitre 21 s'arrête avant l'entretoise 9 afin de laisser une ouverture 22 pour le toit ouvrant 3. Dans ce cas, la vitre 21 du hayon est en contact avec l'arrière 3a du toit ouvrant.

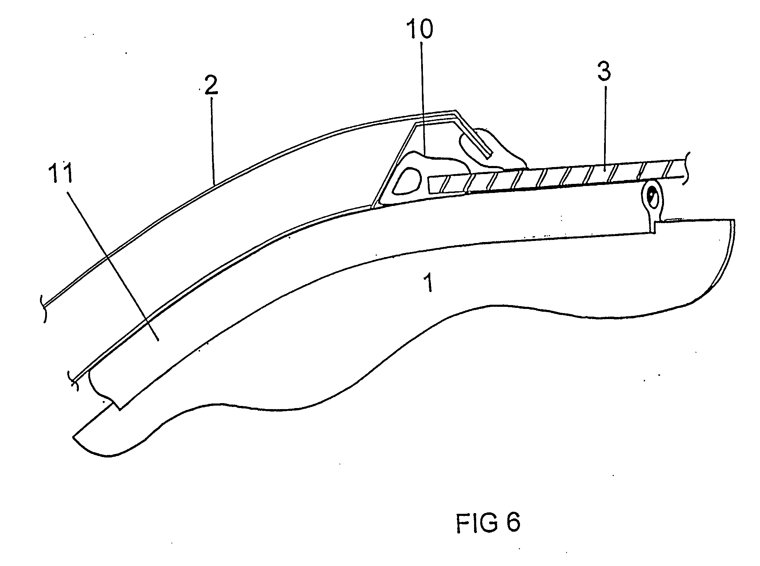

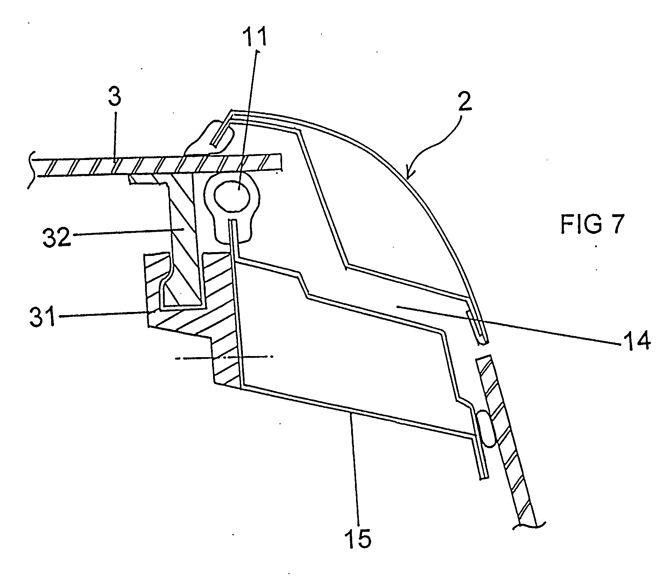

Afin de permettre tous ces mouvements tout en assurant une certaine étanchéité au véhicule, un joint d'étanchéité périphérique 11 est préférentiellement disposé sur le pourtour 16 de l'ouverture du hayon 2 et du toit ouvrant 3 (cf figures 3 et 6) comme pour un hayon classique où l'écoulement est assuré sur les côtés par un passage 14 entre le hayon 2 et la structure 15 du véhicule (cf figure 7).

Comme cela apparaît à la figure 6, le toit ouvrant 3 vient s'intercaler entre le hayon 2 et le joint périphérique 11.

L'étanchéité du toit ouvrant 3 est assurée d'une part par le joint périphérique 11 et d'autre part par le joint 10 disposé sur sa partie arrière 3a dans le même plan que le dessous de l'entretoise 9 du hayon afin de s'assurer que l'eau qui pourrait être retenue sur le toit ouvrant 3 soit arrêtée par ce joint 10 qui dirige alors l'eau vers les côtés au-dessus du joint périphérique 11 dans l'évacuation 14 figurant à la figure 7. En effet, l'entretoise 9 du hayon en position fermée est posée sur le joint périphérique 11 et pour assurer l'étanchéité et la continuité de l'écoulement, il faut que tous les éléments comme l'entretoise 9, le joint 10 et le toit ouvrant 3 soient dans le même plan, afin d'être en contact avec le joint périphérique 11.

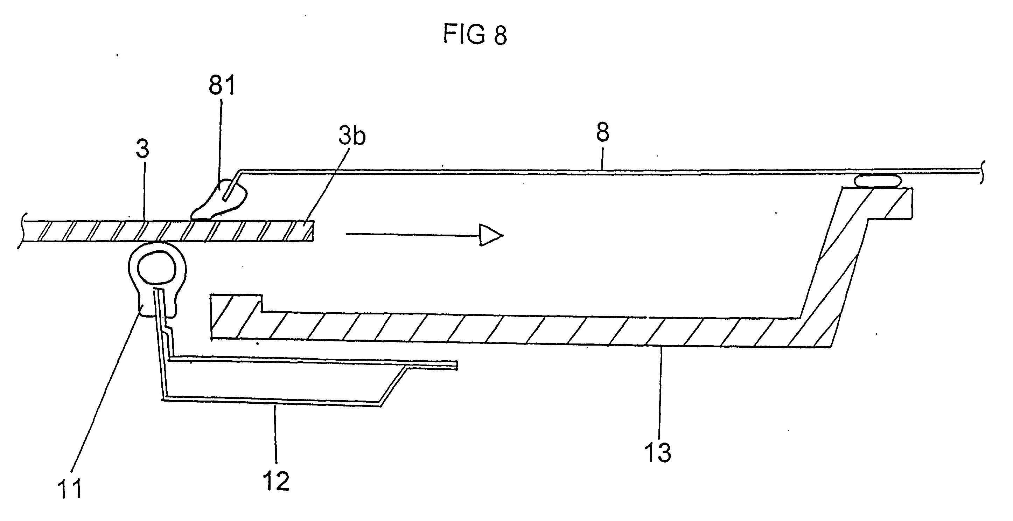

Le mouvement du toit ouvrant 3 est assuré de façon classique (cf figure 7) par un rail 32 qui coulisse dans une pièce en U 31 fixée à la structure 15 et comme cela apparaît à la figure 8, le toit ouvrant 3 s'insère entre le toit 8 du véhicule et le pavillon intérieur 13 de façon classique. L'étanchéité à l'avant du toit ouvrant 3 est assurée d'une part par le joint périphérique 11 sur lequel est posé l'avant 3b du toit ouvrant 3 quand celui-ci est fermé et d'autre part par une lèvre 81 fixée de façon connue sur le toit 8 du véhicule. L'avant 3b du toit entre dans l'espace compris entre le toit 8 du véhicule et le pavillon intérieur 13 quand on ouvre le toit ouvrant 3.

Afin d'assurer une certaine rigidité à la caisse, le pourtour 16 de l'ouverture du hayon 2 et du toit ouvrant 3 est renforcé et notamment un renfort 12 est placé à l'avant du toit ouvrant 3 comme cela apparaît aux figures 8 et 9.

La figure 9 montre une variante de l'invention où l'entretoise 9 est disposée dans la partie haute du hayon 2; l'entretoise 9 est donc en contact avec le toit 8.

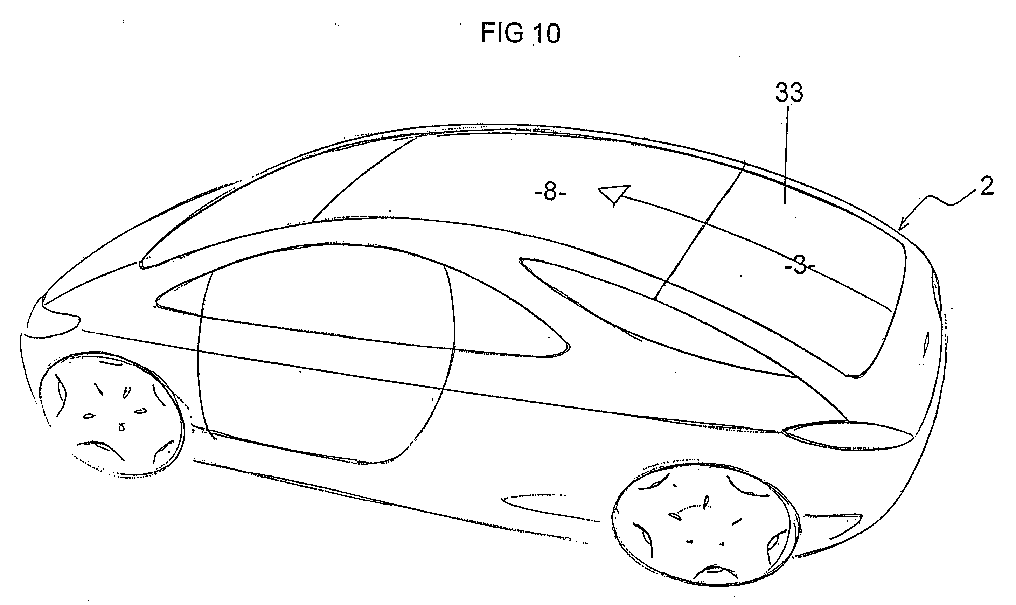

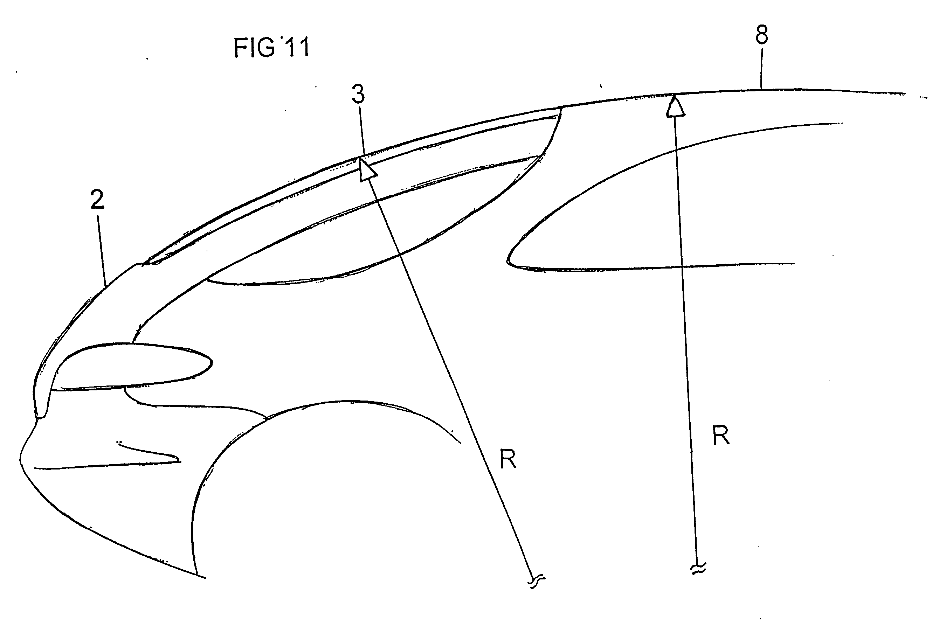

Les figures 10 et 11 présentent une variante de l'invention où la vitre 33 du toit ouvrant constitue également la vitre 21 du hayon 2. Pour cela il faut que le rayon de courbure R du hayon 2 et celui du toit 8 du véhicule soient identiques afin que le toit ouvrant 3 puisse entrer dans le toit 8 ; dans ce cas le hayon 2 s'utilise comme un hayon normal et si l'on souhaite charger un objet 7 volumineux, il suffit de faire coulisser le toit ouvrant 3 vers l'avant, libérant ainsi toute la surface vitrée arrière du véhicule, d'ouvrir le hayon, de charger l'objet 7 puis de refermer le hayon 2.

Selon une autre variante de l'invention, la vitre 21 du hayon 2 peut être coulissante vers le bas dans le hayon 2 de façon connue.

## Revendications

1. Véhicule automobile, muni d'un hayon (2) vitré et d'un toit ouvrant (3) disposé à l'arrière du toit (8) du véhicule, **caractérisé en ce que** les articulations (5) du hayon sont disposées à l'avant de l'ouverture (22) du toit ouvrant.

2. Véhicule automobile selon la revendication 1, **caractérisé en ce que** le hayon (2) est pourvu d'une entretoise (9) disposée sur la partie haute de la vitre (21) équipant le hayon, à l'arrière de l'ouverture (22) du toit ouvrant.

3. Véhicule automobile selon la revendication 2, **caractérisé en ce que** le dessous de l'entretoise (9) et le dessous du toit ouvrant (3) sont disposés en continuité l'un avec l'autre.

4. Véhicule automobile selon la revendication 1, **caractérisé en ce que** le hayon (2) est pourvu d'une entretoise (9) disposé sur la partie haute du hayon.

5. Véhicule automobile selon la revendication 4, **caractérisé en ce que** la vitre (21) s'arrête avant l'entretoise (9).

6. Véhicule automobile selon la revendication 5, **caractérisé en ce que** le bord arrière du toit ouvrant (3a) est en contact avec la vitre (21) du hayon.

7. Véhicule automobile selon la revendication 1, **caractérisé en ce qu'**un joint d'étanchéité périphérique (11) est disposé sur tout le pourtour (16) de l'ouverture constituée par le hayon (2) et le toit ouvrant (3).

8. Véhicule automobile selon la revendication 7, **caractérisé en ce que** le toit ouvrant (3) est équipé d'un joint d'étanchéité (10) disposé à l'arrière du toit ouvrant (3).

9. Véhicule automobile selon la revendication 8, **caractérisé en ce que** le joint d'étanchéité (10) dirige l'écoulement de l'eau du toit ouvrant (3) sur les côtés à l'extérieur du joint périphérique (11).

10. Véhicule automobile selon la revendication 1, **caractérisé en ce que** le toit ouvrant (3) s'ouvre en coulissant vers l'avant du véhicule.

11. Véhicule automobile selon la revendication 1, **caractérisé en ce que** le toit ouvrant (3) est en verre.

12. Véhicule automobile selon la revendication 11, **caractérisé en ce que** le toit (8) du véhicule et le hayon (2) ayant un même rayon de courbure, le toit ouvrant (3) constitue aussi la vitre du hayon (2).

13. Véhicule automobile selon la revendication 1, **caractérisé en ce que** le hayon (2) est équipé d'une glace (21) coulissante.

14. Véhicule automobile selon la revendication 1, **caractérisé en ce que** ledit véhicule est renforcé sur le pourtour (16) de l'ouverture constituée par le hayon (2) et le toit ouvrant (3).

15. Véhicule automobile selon la revendication 14, **caractérisé en ce que** le toit (8) du véhicule est renforcé à l'avant du toit ouvrant.

## Patentansprüche

1. Kraftfahrzeug mit einer verglasten Heckklappe (2) und einem Schiebedach (3), das hinter dem Dach (8) des Fahrzeugs angeordnet ist, **dadurch gekennzeichnet, dass** die Gelenke (5) der Heckklappe vor der Öffnung (22) des Schiebedachs angeordnet sind.

2. Kraftfahrzeug nach Anspruch 1, **dadurch gekennzeichnet, dass** die Heckklappe (2) mit einer Strebe (9) versehen ist, die am oberen Abschnitt der Scheibe (21) der Heckklappe, hinter der Öffnung (22) des Schiebedachs, angeordnet ist.

3. Kraftfahrzeug nach Anspruch 2, **dadurch gekennzeichnet, dass** die Unterseite der Strebe (9) und die Unterseite des Schiebedachs (3) so angeordnet sind, dass sie einander fortsetzen.

4. Kraftfahrzeug nach Anspruch 1, **dadurch gekennzeichnet, dass** die Heckklappe (2) mit einer Strebe (9) versehen ist, die am oberen Abschnitt der Heckklappe angeordnet ist.

5. Kraftfahrzeug nach Anspruch 4, **dadurch gekennzeichnet, dass** die Scheibe (21) vor der Strebe (9) endet.

6. Kraftfahrzeug nach Anspruch 5, **dadurch gekennzeichnet, dass** die hintere Kante (3a) des Schiebedachs mit der Scheibe (21) der Heckklappe in Kontakt steht.

7. Kraftfahrzeug nach Anspruch 1, **dadurch gekennzeichnet, dass** am gesamten Umfang (16) der von der Heckklappe (2) und dem Schiebedach (3) gebildeten Öffnung eine peripherische Dichtung (11) angeordnet ist.

8. Kraftfahrzeug nach Anspruch 7, **dadurch gekennzeichnet, dass** das Schiebedach (3) mit einer Dichtung (10) versehen ist, die an der Hinterseite des Schiebedachs (3) angeordnet ist.

9. Kraftfahrzeug nach Anspruch 8, **dadurch gekennzeichnet, dass** die Dichtung (10) abfließendes Wasser vom Schiebedach (3) über die Seiten außerhalb der peripherischen Dichtung (11) führt.

10. Kraftfahrzeug nach Anspruch 1, **dadurch gekennzeichnet, dass** sich das Schiebedach (3) durch Verschieben zur Vorderseite des Fahrzeugs hin öffnet.

11. Kraftfahrzeug nach Anspruch 1, **dadurch gekennzeichnet, dass** das Schiebedach (3) aus Glas ist.

12. Kraftfahrzeug nach Anspruch 11, **dadurch gekennzeichnet, dass** das Dach (8) des Fahrzeugs und die Heckklappe (2) einen identischen Krümmungsradius haben und das Schiebedach (3) auch die Scheibe der Heckklappe (2) bildet.

13. Kraftfahrzeug nach Anspruch 1, **dadurch gekennzeichnet, dass** die Heckklappe (2) mit einem Schiebefenster (21) versehen ist.

14. Kraftfahrzeug nach Anspruch 1, **dadurch gekennzeichnet, dass** das Fahrzeug am Umfang (16) der von der Heckklappe (2) und dem Schiebedach (3) gebildeten Öffnung verstärkt ist.

15. Kraftfahrzeug nach Anspruch 14, **dadurch gekennzeichnet, dass** das Dach (8) des Fahrzeugs an der Vorderseite des Schiebedachs verstärkt ist.

## Claims

1. Motor vehicle, provided with a glazed tailgate (2) and a sunroof (3) arranged behind the roof (8) of the vehicle, **characterised in that** the hinges (5) of the tailgate are arranged in front of the opening (22) of the sunroof.

2. Motor vehicle according to Claim 1, **characterised in that** the tailgate (2) is provided with a strut (9) arranged on the upper part of the window (21) fitted to the tailgate, behind the opening (22) of the sunroof.

3. Motor vehicle according to Claim 2, **characterised in that** the underneath of the strut (9) and the underneath of the sunroof (3) are arranged in line with one another.

4. Motor vehicle according to Claim 1, **characterised in that** the tailgate (2) is provided with a strut (9) arranged on the upper part of the tailgate.

5. Motor vehicle according to Claim 4, **characterised in that** the window (21) stops before the strut (9).

6. Motor vehicle according to Claim 5, **characterised in that** the rear edge of the sunroof (3a) is in contact with the window (21) of the tailgate.

7. Motor vehicle according to Claim 1, **characterised in that** a peripheral sealing joint (11) is arranged on the whole circumference (16) of the opening constituted by the tailgate (2) and the sunroof (3).

8. Motor vehicle according to Claim 7, **characterised in that** the sunroof (3) is equipped with a sealing joint (10) arranged behind the sunroof (3).

9. Motor vehicle according to Claim 8, **characterised in that** the sealing joint (10) directs the water run-off from the sunroof (3) over the sides on the outside of the peripheral joint (11).

10. Motor vehicle according to Claim 1, **characterised in that** the sunroof (3) opens by sliding towards the front of the vehicle.

11. Motor vehicle according to Claim 1, **characterised in that** the sunroof (3) is made of glass.

12. Motor vehicle according to Claim 11, **characterised in that**, the roof (8) of the vehicle and the tailgate (2) having the same radius of curvature, the sunroof (3) also constitutes the window of the tailgate (2).

13. Motor vehicle according to Claim 1, **characterised in that** the tailgate (2) is equipped with a sliding pane (21).

14. Motor vehicle according to Claim 1, **characterised in that** said vehicle is reinforced on the periphery (16) of the opening constituted by the tailgate (2) and the sunroof (3).

15. Motor vehicle according to Claim 14, **characterised in that** the roof (8) of the vehicle is reinforced in front of the sunroof.
